# DEMANDE DE BREVET EUROPEEN

(11) **EP 1 662 196 A2**
(43) Date de publication de la demande: **31.05.2006**
(21) Numéro de dépôt: 05300908.0
(22) Date de dépôt: 09.11.2005
(51) Int. Cl.: F17C 5/00, F17C 7/00, F17C 13/02, F17C 13/08

(54) **Stockage de gaz sous pression et utilisation dans un véhicule automobile**

(30) Priorité: 26.11.2004 FR 0452765
(71) Demandeur: L'AIR LIQUIDE, Société Anonyme à Directoire et Conseil de Surveillance pour l'Etude et l'Exploitation des, 75321 Paris Cedex 07 (FR)
(72) Inventeur: Pisot, Philippe, 95290 L'Isle Adam (FR)
(74) Mandataire: De Cuenca, Emmanuel Jaime

(57) **Abrégé**

L'ensemble de stockage de gaz sous pression, par exemple de l'hydrogène pour la fourniture à un dispositif de génération de puissance électrique ou mécanique, comprend au moins une capacité haute pression (ROᵢ) disposée dans une enveloppe (E) connectable à une structure réceptrice (A), par exemple un châssis de véhicule automobile, les parois de l'enveloppe comportant divers raccords de connexion (CROᵢ) raccordables à une ligne de remplissage (F), une ligne utilisatrice (M) ou une cheminée d'évacuation (C), le circuit commun (20) aux différentes capacités étant relié à un tronçon de remplissage (30) muni de filtres (F₀₁, F₀₂) et d'une vanne d'isolement (HV01), et à un tronçon de distribution (40) comprenant au moins une vanne d'isolement (HV03) et un détendeur de pression (PCV) ramenant la haute pression du gaz stocké à une pression moyenne d'alimentation de l'unité utilisatrice (U).

## Description

La présente invention concerne les ensembles amovibles de stockage de gaz sous pression, communément désignés sous l'appellation « rack », qui peuvent être connectés de façon séparable à un dispositif utilisateur, en particulier une source de puissance de véhicule automobile, et peuvent donc être aisément inter-changés pour être remplis, après utilisation, à une station de remplissage ad hoc en vue du remplacement ultérieur d'un autre ensemble amovible, sensiblement vidé de son gaz.

La présente invention a pour objet de proposer un ensemble amovible de ce type présentant des fonctionnalités et une sécurité accrues, et convenant à différentes architectures pour de nombreuses utilisations finales.

Pour ce faire, selon un aspect de l'invention, l'ensemble amovible de stockage de gaz sous pression comprend, dans une enveloppe, au moins une capacité de stockage de gaz sous une première pression ayant au moins un port de connexion, un tronçon de ligne de distribution, incorporant au moins une première vanne d'isolement, relié audit port et se terminant par un premier raccord de connexion monté dans une paroi de l'enveloppe, un tronçon de ligne de remplissage, incorporant au moins une deuxième vanne d'isolement, relié à la capacité de stockage et se terminant par un deuxième raccord de connexion monté dans une paroi de l'enveloppe, et au moins un détendeur de pression réduisant à une deuxième pression inférieure à la première pression la pression du fluide délivrable au premier raccord de connexion.

Selon d'autres caractéristiques de l'invention, l'ensemble de stockage de gaz comprend :
- au moins un tronçon de ligne de mise à l'atmosphère relié au tronçon de ligne de remplissage et muni d'un fusible thermique ;
- au moins un tronçon de ligne d'évacuation relié au tronçon de ligne de distribution, se terminant par un troisième raccord de connexion monté dans une paroi de l'enveloppe et comportant au moins une soupape de sécurité contre les surpressions ;
- au moins un tronçon de ligne de purge relié au tronçon de ligne de remplissage ou au tronçon de ligne de distribution, se terminant par un quatrième raccord de connexion monté dans une paroi de l'enveloppe et comportant une vanne d'isolement.

La présente invention a également pour objet l'utilisation d'un tel ensemble dans une structure mobile, typiquement un véhicule automobile, le gaz stocké étant un gaz, tel que l'hydrogène ou du gaz naturel, de génération de puissance pour l'entraînement du véhicule.

D'autres caractéristiques et avantages de la présente invention ressortiront de la description suivante de modes de réalisation donnés à titre illustratif mais nullement limitatif, faite en relation avec les dessins annexés sur lesquels :
- la figure 1 est un schéma synoptique d'un premier mode de réalisation d'un ensemble selon l'invention ;
- la figure 2 est un schéma partiel d'une variante du mode de réalisation de la figure 1 ;
- la figure 3 est un schéma partiel d'une autre variante du mode de réalisation de la figure 1 ;
- la figure 4 est un schéma synoptique d'un autre mode de réalisation de l'invention ; et
- la figure 5 est un schéma synoptique d'encore un autre mode de réalisation selon l'invention.

Dans la description qui va suivre et sur les dessins, les éléments identiques ou analogues sont repérés par les mêmes références, éventuellement numérotées et indicées à suivre.

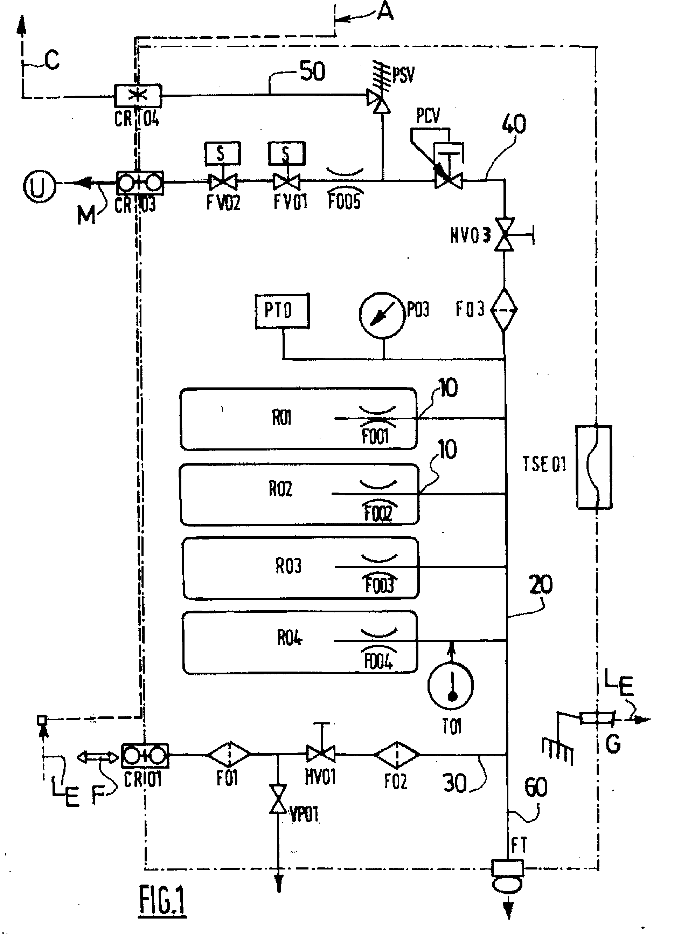

Dans le mode de réalisation de la figure 1, plusieurs capacités de stockage de gaz sous pression R0ᵢ, en l'occurrence quatre capacités R 01 à R 04, ayant chacune un port 10 de connexion à un tronçon de tubulure commune 20, sont disposées dans une enveloppe fermée E avantageusement étanche formant une structure autoporteuse insérable dans et extractible d'une structure receveuse figurée par la ligne de contour A.

Dans le mode de réalisation de la figure 1, le tronçon de la ligne commune 20 est relié d'une part à un tronçon de ligne de remplissage 30 se terminant vers l'extérieur par un raccord de connexion rapide CR01, en l'occurrence du type à double obturation monté dans une paroi de l'enveloppe E, permettant une connexion rapide à une ligne F de remplissage des capacités R0ᵢ et / ou à une ligne de purge de ces dernières. Le tronçon commun 20 est également relié à un tronçon de ligne de distribution 40 se terminant, en sortie de l'enveloppe E, par un raccord à double obturation CR03 permettant un raccordement rapide à une ligne M d'alimentation en fluide d'une unité utilisatrice U dans la structure receveuse A.

Le tronçon de ligne de remplissage 30 comporte deux filtres F01 et F02 de part et d'autre d'une vanne d'isolement HV01, à commande électrique ou pneumatique ou éventuellement manuelle. En amont de cette vanne HV01 un purgeur VP01 permet une purge des capacités R0ᵢ hors de l'enveloppe E en cas de défaillance d'étanchéité de cette vanne HV01. La jonction entre les tronçons 20 et 30 est en outre reliée par un tronçon de mise à l'atmosphère 60 à un fusible thermique FT01 agencé dans une paroi de l'enveloppe E et permettant une vidange complète des capacités R0ᵢ en cas d'échauffement ou d'incendie de l'ensemble.

Le tronçon de ligne de distribution 40 comporte, en série, un filtre F03 en amont d'une vanne d'isolement HV03, typiquement à actionnement manuel, permettant la fermeture haute pression du circuit de sortie, puis un régulateur de pression PCV permettant d'abaisser la haute pression P1 dans les capacités R0ᵢ à une pression d'utilisation P2, n'excédant typiquement pas 10 bars, pour fourniture à l'unité utilisatrice U via la ligne M. Le tronçon de distribution 40 comporte en outre, vers la sortie, une restriction F005 assurant une limitation du débit en cas de rupture du circuit aval basse pression M, et deux vannes à commande électrique ou pneumatique FV01 et FV02 permettant une fermeture du circuit de sortie piloté par un signal en provenance de la structure réceptrice A.

Avantageusement, comme représenté, un tronçon de ligne d'évacuation 50 incorporant une soupape de sécurité PSV assurant la protection des circuits aval est prévu en aval de la vanne PCV et se termine hors de l'enveloppe E par un connecteur sans obturateur CR04 de connexion à une ligne d'évacuation de cheminée C.

Un indicateur de température T01, avantageusement situé du côté amont du tronçon commun 20, et des indicateurs de pression P0 et PT0, avantageusement situés du côté aval du tronçon commun 20, transmettent en permanence des indications d'état à l'utilisateur, soit directement, soit vers un dispositif de supervision de l'unité utilisatrice U dans la structure A.

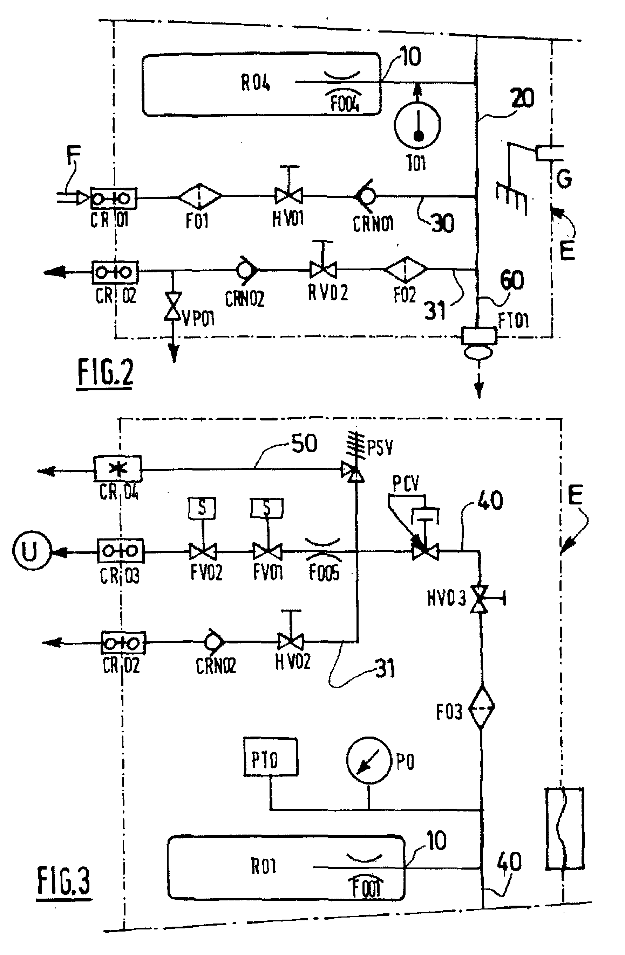

Le mode de réalisation représenté partiellement sur la figure 2 se distingue du précédent en ce sens que le tronçon de remplissage 30 est dédié au seul remplissage et est doublé par un tronçon de purge 31 relié au purgeur VP01 et se terminant par un raccord de connexion à double obturation CR02 disposé dans la paroi de l'enveloppe E, le tronçon de purge 31 comprenant sa propre vanne d'isolement HV02.

L'agencement de la figure 2, avec des clapets anti-retour CRN01 et CRN02 dans les tronçons 30 et 31, permet une plus grande maîtrise de la filtration des flux unidirectionnels dans ces tronçons 30 et 31, ce dernier tronçon évitant la contrainte de placer ou maintenir l'enveloppe E dans une structure d'accueil ou de remplissage pour purger les capacités R0ᵢ.

Le mode de réalisation de la figure 3 se distingue de celui des figures 1 et 2 en ce sens que le tronçon de purge 31 est reporté du côté basse pression, en étant relié au tronçon de distribution 40 en aval du réducteur de pression PCV.

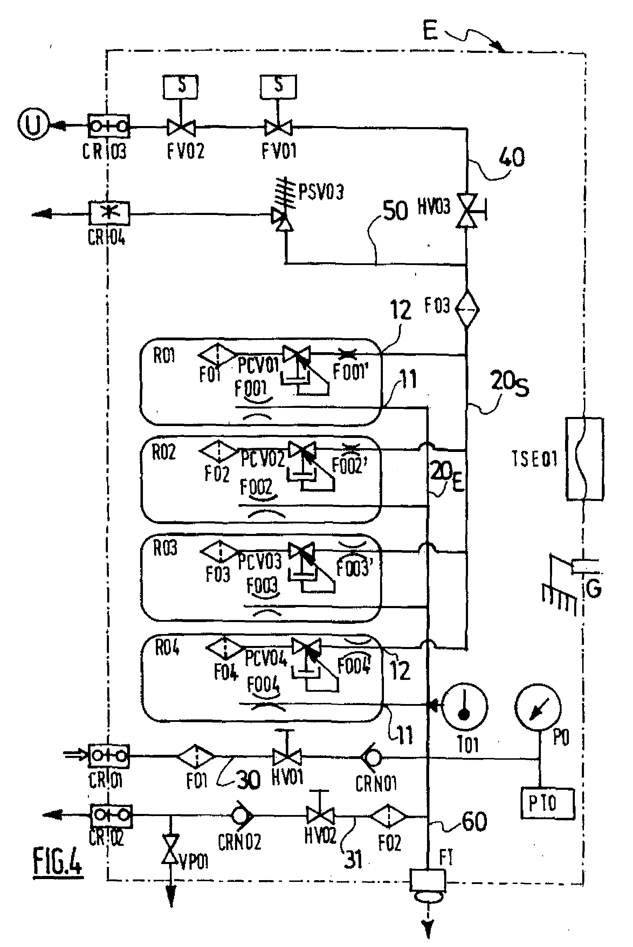

Le mode de réalisation de la figure 4 correspond sensiblement à celui des figures 1 et 2 mais avec des capacités R0ᵢ comportant deux ports de connexion, en l'occurrence un port d'entrée 11 relié à un tronçon commun 20_{E} et un port de sortie 12 relié à un tronçon commun de sortie 20_{S}. De plus, dans ce mode de réalisation, la réduction de pression du gaz haute pression est effectuée dans chaque capacité R0ᵢ au moyen d'un détendeur de pression PCV0ᵢ inséré dans le tronçon de tubulure sortie débouchant par le port de sortie 12. Dans ce mode de réalisation, les indicateurs de pression P0 et PT0 sont raccordés à la partie amont du tronçon commun d'entrée 20_{E} relié aux ports d'entrée 11.

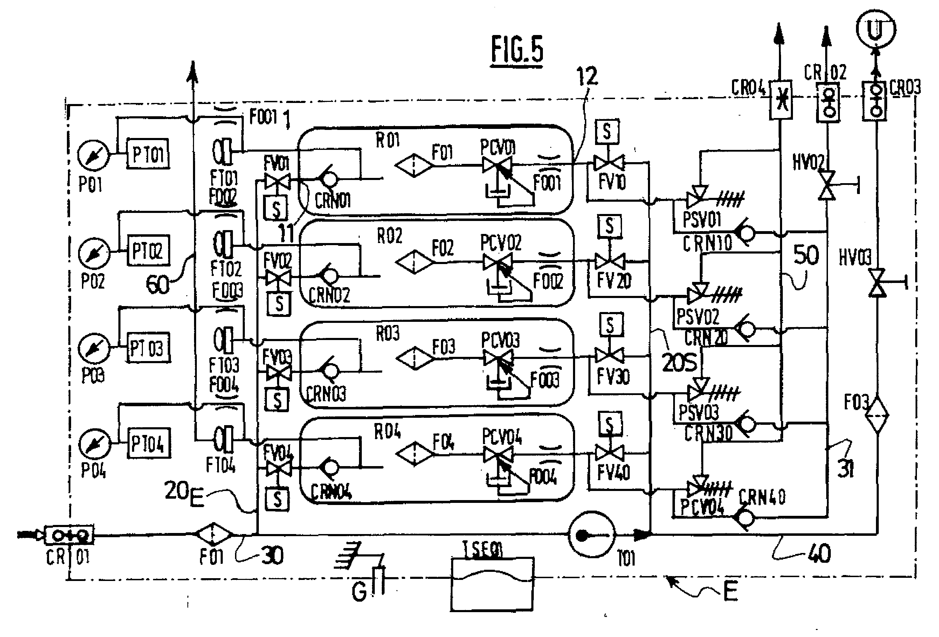

Le mode de réalisation de la figure 5 comporte des capacités R0ᵢ à double ports opposés avec détendeur de pression PCV0ᵢ intégré, chaque capacité R0ᵢ comportant une vanne à commande électrique ou pneumatique FV'0ᵢ sur l'entrée haute pression 11 à une extrémité de la capacité et une vanne de sortie FV10-FV40 sur la sortie basse pression 12 à l'autre extrémité de la capacité relié chacune au raccord d'évacuation CR04 par une soupape de sécurité propre PSV0ᵢ. De façon similaire, l'entrée haute pression 11 de chaque capacité est associée à un fusible thermique propre FT0ᵢ et à des indicateurs de pression individuels P0ᵢ et PT0ᵢ dans un agencement de haute sécurité de type « fail safe ».

Dans tous les modes de réalisation, l'enveloppe E comporte en outre avantageusement un disque de rupture TSE01 protégeant la structure mécanique d'une éventuelle surpression et comporte une connexion G permettant une liaison équipotentielle LE avec la structure receveuse A ou une mise à la terre.

Les ensembles amovibles de stockage de gaz sous pression qui viennent d'être décrits conviennent tout particulièrement pour le stockage haute pression, c'est à dire à une pression supérieure à 600 bars, typiquement d'environ 800 bars, de gaz de génération de puissance pour l'entraînement de moteurs, notamment d'hydrogène ou de gaz naturel pour l'alimentation directe de moteur à combustion thermique ou d'hydrogène pour l'alimentation de pile à combustible d'entraînement ou de fourniture de puissance annexe de véhicule automobile. Dans cette optique, chaque capacité R0ᵢ , typiquement en matériau composite avec un chemisage métallique ou en matériau plastique, comporte avantageusement un orifice calibré interne F001 à F 004 assurant une limitation du débit en cas d'endommagement des tronçons communs 20, 20_{E} ou 20_{S}. Dans le cas de la fourniture de gaz à un organe générateur de puissance d'un véhicule A, les indicateurs de température T0, P0 et PT0 ainsi que les diverses vannes commandées sont avantageusement reliées à l'unité électronique de gestion du véhicule.

Quoique l'invention ait été décrite en relation avec des modes de réalisation particuliers, elle ne s'en trouve pas limitée mais est susceptible de modifications et de variantes qui apparaîtront à l'homme du métier dans le cadre des revendications ci-après.

## Revendications

1. Ensemble amovible de stockage de gaz sous pression, comprenant, dans une enveloppe (E), :
- au moins une capacité (R0ᵢ) de stockage de gaz sous une première pression et ayant au moins un port de connexion (10, 11, 12) ;
- un tronçon de ligne de distribution (40), incorporant au moins une vanne d'isolement (HV03), relié audit port (10 ;12) et se terminant par un premier raccord de connexion (CR03) monté dans une paroi de l'enveloppe (E) ;
- un tronçon de ligne de remplissage (30), incorporant au moins une deuxième vanne d'isolement (HV01, FV0ᵢ), relié à la capacité (R0ᵢ) et se terminant par un deuxième raccord de connexion (CR01) monté dans une paroi de l'enveloppe ; et
- au moins un détendeur de pression (PCV0ᵢ) réduisant à une deuxième pression, inférieure à la première pression, la pression du fluide délivrable au premier raccord de connexion (CR03).

2. Ensemble selon la revendication 1, comprenant au moins un tronçon de mise à l'atmosphère (60) relié au tronçon de remplissage (30) et muni d'un fusible thermique (FT ; FT0ᵢ).

3. Ensemble selon la revendication 1 ou la revendication 2, comprenant au moins un tronçon de ligne d'évacuation (50) relié au tronçon de ligne de distribution (40), se terminant par un troisième raccord de connexion (CR04) monté dans une paroi de l'enveloppe (E) et comportant au moins une soupape de sécurité contre les surpressions (PSV ; PSV0ᵢ).

4. Ensemble selon l'une des revendications précédentes comprenant au moins un tronçon de ligne de purge (31) relié au tronçon de ligne de remplissage (30) ou au tronçon de ligne de distribution (40), se terminant par un quatrième raccord de connexion (CR0₂) monté dans une paroi de l'enveloppe (E) et comportant une vanne d'isolement (HV02).

5. Ensemble selon l'une des revendications précédentes, comprenant au moins un indicateur de température (T01) relié au tronçon de ligne de remplissage (30) ou au tronçon de ligne de distribution (40).

6. Ensemble selon l'une des revendications précédentes, comprenant au moins un indicateur de pression (P₀ ; PT0i) relié au tronçon de ligne de remplissage (30) ou au tronçon de ligne de distribution (40).

7. Ensemble selon l'une des revendications précédentes, dans lequel l'enveloppe (E) comprend un dispositif de connexion de mise à la terre (G).

8. Ensemble selon l'une des revendications précédentes, dans lequel l'enveloppe (E) comprend un dispositif de protection contre les surpressions (TSE0₁).

9. Ensemble selon l'une des revendications précédentes, dans lequel le détendeur de pression (PCV0ᵢ) est intégré dans la capacité de stockage (R0ᵢ).

10. Ensemble selon l'une des revendications précédentes, dans lequel le tronçon de ligne de distribution (40) et/ou le tronçon de ligne de remplissage (30) comprend au moins un filtre (F0ᵢ).

11. Ensemble selon l'une des revendications précédentes, dans lequel la capacité (R0ᵢ) comporte deux ports de connexion (11, 12) à des circuits de fluide (20_{E}, 20s).

12. Ensemble selon l'une des revendications 11, dans lequel la capacité (R0ᵢ) est du type composite avec un chemisage.

13. Utilisation d'un ensemble selon l'une des revendications précédentes dans une véhicule automobile (A), le gaz stocké étant un gaz de génération de puissance pour l'entraînement du véhicule.
